# EUROPEAN PATENT SPECIFICATION

(11) **EP 4 210 145 B1**
(45) Date of publication and mention of the grant of the patent: **19.03.2025**
(21) Application number: 22215732.3
(22) Date of filing: 22.12.2022
(51) Int. Cl.: H01M 10/0568, H01M 10/0569, H01M 10/052, H01M 4/38, H01M 4/40

(54) **ELECTROLYTE FOR A LITHIUM-SULFUR BATTERY AND LITHIUM-SULFUR BATTERY COMPRISING THE SAME**
ELEKTROLYT FÜR EINE LITHIUM-SCHWEFEL-BATTERIE UND LITHIUM-SCHWEFEL-BATTERIE DENSELBEN UMFASSEND
ÉLECTROLYTE POUR BATTERIE AU LITHIUM-SOUFRE ET BATTERIE AU LITHIUM-SOUFRE LE COMPRENANT

(30) Priority: 23.12.2021 KR 20210185761; 09.11.2022 KR 20220148630
(43) Date of publication of application: 12.07.2023
(73) Proprietor: LG Energy Solution, Ltd., Seoul 07335 (KR)
(72) Inventor: SONG, Ji-Eun, 34122 Daejeon (KR); LEE, Jae-Gil, 34122 Daejeon (KR); JANG, Eun-Ji, 34122 Daejeon (KR); LEE, Chang-Hoon, 34122 Daejeon (KR); HAN, Sueng-Hoon, 34122 Daejeon (KR)
(74) Representative: Goddar, Heinz J.

(56) References cited:
- EP-A1- 3 780 233
- EP-A1- 4 030 525
- WO-A1-2021/210814
- P. LIU ET AL: "Concentrated dual-salt electrolytes for improving the cycling stability of lithium metal anodes", CHINESE PHYSICS B, vol. 25, no. 7, 5 July 2016 (2016-07-05), pages 78203, XP020305955, ISSN: 1674-1056, [retrieved on 20160705], DOI: 10.1088/1674-1056/25/7/078203

## Description

### TECHNICAL FIELD

The present invention relates to an electrolyte for a lithium-sulfur battery and a lithium-sulfur battery comprising the same.

### BACKGROUND ART

As the application range of lithium secondary batteries extends to not only portable electronic devices, but also electric vehicles (EV) and electric storage systems (ESS), demand for lithium secondary batteries with high capacity, high energy density, and long lifetime is increasing.

Among various lithium secondary batteries, a lithium-sulfur battery is a battery system that uses a sulfur-based material containing a sulfur-sulfur bond as a positive electrode active material, and uses lithium metal, a carbon-based material capable of intercalating/deintercalating lithium ions, or silicon, tin or the like, which forms an alloy with lithium, as a negative electrode active material.

In the lithium-sulfur battery, there is an advantage that sulfur, which is the main material of the positive electrode active material, has a low atomic weight, is very rich in resources and thus easy to supply and receive, and is cheap, non-toxic, and environmentally friendly.

In addition, the lithium-sulfur battery has a theoretical specific capacity of 1,675 mAh/g from the conversion reaction of lithium ions and sulfur (S₈+16Li⁺+16e⁻ → 8Li₂S) in the positive electrode, and when lithium metal is used as the negative electrode, the theoretical energy density of 2,600 Wh/kg is shown. Since the theoretical energy density of the lithium-sulfur battery is much higher than the theoretical energy density of other battery systems (Ni-MH battery: 450 Wh/kg, Li-FeS battery: 480 Wh/kg, Li-MnO₂ battery: 1,000 Wh/kg, Na-S battery: 800 Wh/kg) and lithium ion battery (250 Wh/kg) currently under study, the lithium-sulfur battery is attracting attention as a high-capacity, eco-friendly, and inexpensive lithium secondary battery among the secondary batteries developed so far.

Specifically, in the case of a lithium-sulfur battery, when lithium metal is used as the negative electrode active material, since the theoretical specific capacity is very high as 3,860 mAh/g, and the standard reduction potential (Standard Hydrogen Electrode; SHE) is also very low as -3.045 V, it is possible to realize a battery with high capacity and high energy density, so several studies are being conducted as a next-generation battery system.

However, as lithium metal, which is a negative electrode active material, reacts easily with the electrolyte due to its high chemical/electrochemical reactivity, a passivation layer is formed on the surface of the negative electrode. Such a passivation layer causes a local difference in current density, thereby forming lithium dendrite on the surface of lithium metal. In addition, the lithium dendrite formed in this way causes an internal short circuit and inert lithium (dead lithium) of the battery, thereby causing problems of increasing the physical and chemical instability of the lithium secondary battery, as well as reducing the battery capacity and reducing the cycle lifetime.

Thus, lithium-sulfur batteries undergo a reduction reaction in which sulfur accepts electrons at the positive electrode and an oxidation reaction in which lithium is ionized at the negative electrode during discharge.

In the lithium-sulfur batteries, lithium polysulfide (Li₂Sₓ, x = 2 to 8) is produced at the positive electrode during the discharge, and some of the lithium polysulfide is dissolved in an electrolyte, causing side reaction in the battery, inducing faster degradation of the battery, and also shuttle reactions may occur during the charge, resulting in significantly reduced charge/discharge efficiency. Moreover, as mentioned above, lithium metal used for the negative electrode continuously reacts with the electrolyte, leading to accelerated decomposition of lithium salts and additives of the electrolyte.

At high temperatures, the degree of electrolyte decomposition, side reactions, shuttle reactions, etc. are accelerated.

A well known electrolyte used for lithium-sulfur batteries in the art is lithium bis(fluorosulfonyl)imide which does not provide sufficient oxidation stability especially at high temperatures.

An approach to overcome these problems is disclosed in KR 10-2016-0037084, disclosing sulfur-containing carbon nanotube aggregates coated with graphene to prevent the dissolution of lithium polysulfide and to increase the conductivity of the sulfur-carbon nanotube composite as well as the loading amount of sulfur.

WO 2021/210814 A1 and EP 3 780 233 A1 disclose non-aqueous electrolyte solutions for lithium secondary batteries, comprising a lithium salt, preferably LiFSI or LiTFSI, dissolved in an ether-based solvent, and a heterocyclic compound as co-solvent or additive.

Chinese Physics B, vol. 25, No. 7, page 78203, discloses electrolyte compositions comprising a mixture of LiTFSI and LiFSI as lithium salts dissolved in an ether-based solvent.

### DISCLOSURE

### TECHNICAL PROBLEM

Therefore, there is a need to develop an electrolyte for a lithium-sulfur battery overcoming drawbacks of the prior art, especially to provide an electrolyte with improved oxidation stability and storage stability at high temperature environments, so that life characteristics of a lithium sulfur battery comprising such an electrolyte, especially at high temperatures, are improved.

### TECHNICAL SOLUTION

The above problems are solved in accordance with an electrolyte for a lithium-sulfur battery according to claim 1. Further, the object is achieved by a lithium-sulfur battery according to claim 5. Further embodiments result from the dependent claims and/or the following detailed description.
1. Especially, in order to achieve the above objects, the present invention provides an electrolyte for a lithium-sulfur battery comprising a non-aqueous organic solvent and a lithium salt, wherein the lithium salt comprises lithium bis(trifluoromethanesulfonyl)imide,
   wherein the lithium salt comprises one or more lithium salts other than lithium bis(trifluoromethanesulfonyl)imide and the other lithium salt comprises lithium bis(fluorosulfonyl)imide,
   wherein the lithium bis(trifluormethanesulfonyl)imide and the one or more lithium salts other than lithium bis(trifluormethanesulfonyl)imide are present in the electrolyte in a molar ratio of 70:30 to 90:10, and
wherein the non-aqueous organic solvent comprises 70 vol% to 95 vol% of a linear ether-based compound and 5 vol% to 30 vol% of a heterocyclic compound including one or more double bonds. And the present invention provides a lithium-sulfur battery comprising a positive electrode comprising a positive electrode active material, a negative electrode comprising a negative electrode active material; a separator; and an electrolyte according to the invention.

### ADVANTAGEOUS EFFECTS

The electrolyte for a lithium-sulfur battery according to the present invention has high oxidation stability and shows improved storage stability at especially high temperature environments.

Further, the lithium-sulfur battery comprising the electrolyte shows improved life characteristics at high temperature.

Best results are achieved for the specific embodiments described herein and any combinations thereof.

### DESCRIPTION OF DRAWINGS

FIG. 1 is an image showing the observed oxidation stability of an electrolyte solution for a lithium-sulfur battery according to each of examples 1 to 4 and comparative example 1.
FIG. 2 is a graph showing the measured capacity retention of a lithium-sulfur battery after stored at high temperature.
FIG. 3 is a graph showing the measured life characteristics of a coin-cell type lithium-sulfur battery at high temperature (45°C).
FIG. 4 is a graph showing the measured life characteristics of a pouch-cell type lithium-sulfur battery at high temperature (45°C).

### DETAILED DESCRIPTION OF THE INVENTION

The terms and words used in the present specification and claims should not be construed as limited to ordinary or dictionary terms and should be construed in a sense and concept consistent with the technical idea of the present invention, based on the principle that the inventor can properly define the concept of a term to describe this invention in a best way possible.

The terminology used herein is for the purposes of describing particular embodiments only and is not intended for delimiting of the invention. The singular forms "a", "an", and "the" comprise plural reference unless the context dictates otherwise. It is to be understood that the terms such as "comprise" or "have" as used in the present specification are indented to designate the presence of stated features, numbers, steps, operations, components, parts or combinations thereof, but not to preclude the possibility of the presence or addition of one or more other features, numbers, steps, operations, components, parts, or combinations thereof. The term "comprises" explicitly, even if not necessarily limited accordingly, includes the meaning "consists of".

The term "composite" as used herein refers to a material that two or more materials are combined to express a more effective function while forming physically and chemically different phases to each other.

The term "polysulfide" as used herein is a concept comprising both "polysulfide ion (Sₓ²⁻, x = 2-8)" and "lithium polysulfide (Li₂Sₓ or LiSₓ⁻, x = 2-8)".

The present invention relates to an electrolyte for a lithium-sulfur battery comprising a non-aqueous organic solvent and a lithium salt, wherein the lithium salt comprises lithium bis(trifluoromethanesulfonyl)imide (LiTFSI).

The lithium bis(trifluoromethanesulfonyl)imide has improved oxidation stability and high temperature stability and is less prone to decomposition under the continuous reactions between lithium metal as a negative electrode of a lithium-sulfur battery and an electrolyte. Therefore, in the present disclosure, when the lithium bis(trifluoromethanesulfonyl)imide is included as the lithium salt, it is possible to provide an electrolyte for a lithium-sulfur battery with improved oxidation stability and storage stability especially at high temperature, but the mechanism of the present disclosure is not limited thereto.

In the present disclosure, the storage stability at high temperature represents that the lithium salt does not completely decompose and parts of the lithium salt remain at the temperature of 45°C or more when the electrolyte is applied to a lithium-sulfur battery. For example, the storage stability at high temperature may represent that the lithium salt applied to the electrolyte maintains 90 wt% or more of the initial weight at the temperature of 45°C or more weight when the electrolyte is applied to a lithium-sulfur battery.

The lithium salt comprises one or more lithium salts other than lithium bis(trifluoromethanesulfonyl)imide. The other lithium salt comprises lithium bis(fluorosulfonyl)imide.

The lithium bis(trifluoromethanesulfonyl)imide (LiTFSI) may be included in an amount of at least 10 mol%, 20 mol%, 30 mol%, 40 mol%, 50 mol%, 60 mol%, 70 mol%, 80 mol%, 90 mol% or 100 mol%, based on a total number of moles of the lithium salt.

The lithium bis(trifluoromethanesulfonyl)imide (LiTFSI) on the one hand and the one or more other lithium salts on the other hand are present in the electrolyte in a molar ratio of 70:30 to 90:10.. Within this molar ratio, improvements with regard to oxidation stability and storage stability are achieved.

The concentration of the lithium salt may be appropriately determined in consideration of ion conductivity and solubility, and may be, for example, 0.1 to 4.0 M, or 0.5 to 2.0 M. When the concentration of the lithium salt is less than the above range, it is difficult to ensure ion conductivity suitable for operation of the battery. On the contrary, when the concentration of the lithium salt exceeds the above range, the viscosity of the electrolyte is increased, so that the mobility of lithium ions is deteriorated, and the decomposition reaction of the lithium salt itself is increased, thereby deteriorating the performance of the battery. Therefore, the concentration of the lithium salt is appropriately adjusted within the above range.

The electrolyte for the lithium-sulfur battery according to the present invention comprises a non-aqueous organic solvent as a medium through which ions involved in the electrochemical reaction of the lithium-sulfur battery can move, which is for dissolving the lithium salt.

In the present invention, the non-aqueous organic solvent includes a linear ether-based compound and a heterocyclic compound including one or more double bonds.

The linear ether-based compound allows electrochemical stability to be ensured within the range of the operating voltage of the battery, while maintaining the solubility of sulfur or sulfur-based compounds and has relatively little occurrence of side reactions with intermediate products due to the operation of the battery.

For example, the linear ether compound may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, polyethylene glycol methylethyl ether. The linear ether compound may be at least one selected from the group consisting of dimethoxyethane, diethoxyethane, and diethyl ether, and may be dimethoxyethane.

The heterocyclic compound is a heterocyclic compound including one or more double bonds, and the heterocycle comprises at least one hetero atom selected from the group consisting of an oxygen atom and a sulfur atom. The heterocyclic compound includes an oxygen atom or a sulfur atom and exhibits polarity, thereby enhancing affinity with other components in the electrolyte, as well as suppressing side reactions and decomposition of the electrolyte.

The heterocyclic compound may be a 3 to 15-membered, a 3 to 7-membered, or a 5 to 6-membered heterocyclic compound.

In addition, the heterocyclic compound may be a heterocyclic compound substituted or unsubstituted by at least one selected from the group consisting of an alkyl group having 1 to 4 carbon atoms, a cyclic alkyl group having 3 to 8 carbon atoms, an aryl group having 6 to 10 carbon atoms, a halogen group, a nitro group (-NO₂), an amine group (-NH₂), and a sulfonyl group (-SO₂); or a multi-cyclic compound of at least one selected from the group consisting of a cyclic alkyl group having 3 to 8 carbon atoms and an aryl group having 6 to 10 carbon atoms and a heterocyclic compound.

For example, the heterocyclic compound may comprise at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene. The heterocyclic compound may comprise at least one selected from the group consisting of 2-methylfuran, 3-methylfuran, and 2-methylthiophene, and may be 2-methylfuran.

In the present invention, the non-aqueous organic solvent comprises the ether-based compound and the heterocyclic compound in a volume ratio of 95:5 to 70:30. In the present invention, the volume ratio corresponds to the ratio of "% by volume of ether" : "% by volume of heterocyclic compound" in the non-aqueous organic solvent. When the ether-based compound and the heterocyclic compound are included in the above-described volume ratio as the non-aqueous organic solvent, it may be effective in preventing a loss of a positive electrode active material and a decrease in ion conductivity of a lithium-sulfur battery. When the heterocyclic compound is contained in a volume ratio of less than 5 relative to the total volume of the non-aqueous organic solvent, there may be a problem of accelerating the deterioration of lifetime due to leaching of the positive electrode active material.

The non-aqueous organic solvent may comprise or consist of 2-methylfurane and dimethoxyethane.

The electrolyte for the lithium-sulfur battery of the present invention may further include nitric acid or nitrous acid compounds in addition to the above-described components. The nitric acid or nitrous acid-based compound has an effect of forming a stable film on a lithium metal electrode, which is a negative electrode, and improving charging/discharging efficiency.

The nitric acid or nitrous acid-based compound is not particularly limited in the present invention, but may be at least one selected from the group consisting of inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂) and ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, and octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and may be lithium nitrate.

The nitric acid or nitrous acid-based compound may be included in an amount of 1 wt% to 10 wt%, 2 wt% to 10 wt% or 3 wt% to 10 wt%, specifically, 3 wt% to 8 wt%, 3 wt% to 6 wt% or 3 wt% to 5 wt%, based on the total weight of the electrolyte for a lithium-sulfur battery, but is not limited thereto. When the nitric acid or nitrous acid-based compound is included in the above-described amount, it may improve the electrical conductivity of the electrolyte solution and suppress the reduction of polysulfide when used in a lithium-sulfur battery, but the present disclosure is not limited thereto.

In addition, the electrolyte of the present invention may further include other additives for the purpose of improving charging/discharging characteristics, flame retardancy, and the like. Examples of the additives may be pyridine, triethylphosphite, triethanolamine, cyclic ether, ethylene diamine, n-glyme, hexamethyl phosphoric triamide, nitrobenzene derivatives, sulfur, quinoneimine dyes, N-substituted oxazolidinone, N,N-substituted imidazolidine, ethylene glycol dialkyl ether, ammonium salt, pyrrole, 2-methoxy ethanol, aluminum trichloride, fluoroethylene carbonate (FEC), propene sultone (PRS), vinylene carbonate (VC) and the like.

According to the present invention is also a lithium-sulfur battery comprising a positive electrode active material, a negative electrode comprising a negative electrode active material; a separator; and an electrolyte according to the invention.

The positive electrode may include a positive electrode current collector and a positive electrode active material layer applied to one or both surfaces of the positive electrode current collector.

The positive electrode current collector supports the positive electrode active material and is not particularly limited as long as it has high conductivity without causing chemical changes in the relevant battery. For example, copper, stainless steel, aluminum, nickel, titanium, palladium, sintered carbon; copper or stainless steel surface-treated with carbon, nickel, silver or the like; aluminum-cadmium alloy or the like may be used as the positive electrode current collector.

The positive electrode current collector can enhance the bonding force with the positive electrode active material by having fine irregularities on its surface and may be formed in various forms such as film, sheet, foil, mesh, net, porous body, foam, or nonwoven fabric.

The positive electrode active material layer may comprise a positive electrode active material and may further comprise a conductive material, a binder, an additive, and the like.

The positive electrode active material comprises sulfur, and specifically may comprise at least one selected from the group consisting of elemental sulfur (S₈) and a sulfur compound. The positive electrode active material may be at least one selected from the group consisting of inorganic sulfur, Li₂Sₙ(n≥1), a disulfide compound, an organic sulfur compound, and a carbon-sulfur polymer ((C₂Sₓ)ₙ: x=2.5 to 50, n≥2). The positive electrode active material may be inorganic sulfur.

The sulfur is used in combination with a conductive material such as a carbon material because it does not have electrical conductivity alone. Accordingly, the sulfur is comprised in the form of a sulfur-carbon composite, and the positive electrode active material may be a sulfur-carbon composite.

The carbon contained in the sulfur-carbon composite is a porous carbon material and provides a framework capable of uniformly and stably immobilizing sulfur and compensates for the low electrical conductivity of sulfur so that the electrochemical reaction can proceed smoothly.

The porous carbon material can generally be prepared by carbonizing various carbonaceous precursors. The porous carbon material may comprise uneven pores therein, the average diameter of the pores is in the range of 1 to 200 nm, and the porosity may range from 10 to 90% of the total volume of the porous carbon material. When the average diameter of the pores is less than the above range, the pore size is only at the molecular level and impregnation with sulfur is impossible. On the contrary, when the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and graphite such as natural graphite, artificial graphite and expanded graphite, and activated carbon. The porous carbon material may be carbon nanotubes.

The sulfur-carbon composite may include 60 to 90 parts by weight, 65 to 85 parts by weight, or 70 to 80 parts by weight of sulfur, based on 100 parts by weight of the sulfur-carbon composite. When the content of sulfur is less than the above-described range, as the content of the porous carbon material in the sulfur-carbon composite is relatively increased, the specific surface area is increased and thus when manufacturing the positive electrode, the content of the binder is increased. This increase in the amount of use of the binder eventually increases the sheet resistance of the positive electrode and acts as an insulator to prevent electron pass, thereby deteriorating the performance of the battery. On the contrary, when the content of sulfur exceeds the above-described range, sulfur, which cannot be combined with the porous carbon material, aggregates with each other, or is re-leached to the surface of the porous carbon material, and thus is difficult to receive electrons, and cannot participate in electrochemical reactions, thereby resulting in loss of battery capacity.

In addition, the sulfur in the sulfur-carbon composite is located on at least one of the inner and outer surfaces of the aforementioned porous carbon material, and at this time, may exist in an area of less than 100%, 1 to 95%, or 60 to 90% of the entire inner and outer surface of the porous carbon material. When sulfur as described above is present on the inner and outer surfaces of the porous carbon material within the above range, the maximum effect may be exhibited in terms of an electron transfer area and wettability with an electrolyte. Specifically, since sulfur is thinly and evenly impregnated on the inner and outer surfaces of the porous carbon material in the above range, the electron transfer contact area can be increased during the charging/discharging process. When sulfur is located in an area of 100% of the entire inner and outer surface of the porous carbon material, the carbon material is completely covered with sulfur, so that it has poor wettability to the electrolyte and poor contact with the conductive material included in the electrode, so that it cannot receive electrons and thus cannot participate in the electrochemical reaction.

The method for preparing the sulfur-carbon composite is not particularly limited in the present invention, and a method commonly used in the art may be used. As an example, a method of simply mixing sulfur and the porous carbon material and then heat-treating them to form a composite may be used.

The positive electrode active material may further comprise at least one additive selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg and the like, and the group IIIA element may comprise Al, Ga, In, T1 and the like, and the group IVA element may comprise Ge, Sn, Pb, and the like.

The positive electrode active material may be included in an amount of 40 to 95% by weight, 45 to 90% by weight, or 60 to 90% by weight, based on a total of 100% by weight of the positive electrode active material layer constituting the positive electrode. When the content of the positive electrode active material is less than the above range, it is difficult to sufficiently exhibit the electrochemical reaction of the positive electrode. On the contrary, when the content exceeds the above range, the content of the conductive material and the binder to be described later is relatively insufficient, and thus there is a problem that the resistance of the positive electrode increases, and the physical properties of the positive electrode decrease.

The positive electrode active material layer may further selectively include a conductive material which allows electrons to move smoothly within the positive electrode (specifically, the positive electrode active material), and binder for well attaching the positive electrode active material to the current collector.

The conductive material is a material that acts as a path, through which electrons are transferred from the current collector to the positive electrode active material, by electrically connecting the electrolyte and the positive electrode active material. The conductive material can be used without limitation as long as it has electrical conductivity.

For example, as the conductive material, graphite such as natural graphite or artificial graphite; carbon blacks such as Super-P, Denka black, acetylene black, Ketjen black, channel black, furnace black, lamp black, and thermal black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The conductive material may be included in an amount of 1 to 10% by weight, or 4 to 7% by weight, based on a total of 100% by weight of the positive electrode active material layer constituting the positive electrode. When the content of the electrically conductive material is less than the above range, it is difficult to transfer electrons between the positive electrode active material and the current collector, thereby reducing voltage and capacity. On the contrary, when the content exceeds the above range, the proportion of positive electrode active material is relatively reduced and thus the total energy (charge amount) of the battery can be reduced. Therefore, it is preferable that the content of the electrically conductive material is determined to be an appropriate content within the above-described range.

The binder maintains the positive electrode active material in the positive electrode current collector, and organically connects the positive electrode active materials to increase the bonding force between them, and any binder known in the art may be used.

For example, the binder may be any one selected from fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxy propyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The content of the binder may be 1 to 10% by weight based on a total of 100% by weight of the positive electrode active material layer constituting the positive electrode. When the content of the binder is less than 0.5 % by weight, the physical properties of the positive electrode may be degraded and thus the positive electrode active material and conductive material may be eliminated. When the content exceeds the above range, the ratio of the positive electrode active material and the conductive material in the positive electrode may be relatively reduced, so that the capacity of the battery may be reduced. Therefore, it is preferable that the content of the binder is determined to be an appropriate content within the above-described range.

In the present invention, the method of manufacturing the positive electrode is not particularly limited and may be a known method by a person skilled in the art or various modified methods thereof.

As an example, the positive electrode may be prepared by preparing a slurry composition for a positive electrode comprising the above-described components, and then applying it to at least one surface of the positive electrode current collector.

The slurry composition for a positive electrode comprises the positive electrode active material, a conductive material, and a binder as described above, and may further comprise a solvent other than the above.

As the solvent, one capable of uniformly dispersing a positive electrode active material, an electrically conductive material, and a binder is used. Such a solvent is an aqueous solvent, and water is most preferred, and in this case, water may be distilled water or deionizied water. However, it is not necessarily limited thereto, and if necessary, a lower alcohol that can be easily mixed with water may be used. Examples of the lower alcohol include methanol, ethanol, propanol, isopropanol, and butanol, and preferably, they may be used in combination with water.

The content of the solvent may be contained at a level having a concentration that allows easy coating, and the specific content varies depending on the application method and apparatus.

The slurry composition for a positive electrode may additionally contain, if necessary, materials commonly used for the purpose of improving its function in the relevant technical field as necessary. For example, a viscosity modifier, a fluidizing agent, a filler, etc. are mentioned.

The method of applying the slurry composition for a positive electrode is not particularly limited in the present invention, and for example, methods such as a doctor blade method, a die casting method, a comma coating method, and a screen printing method can be used. In addition, after being molded on a separate substrate, the slurry for the positive electrode may be applied on the positive electrode current collector by a pressing or lamination method.

After the application, a drying process for removing the solvent may be performed. The drying process is performed at a temperature and time at a level capable of sufficiently removing the solvent, and the conditions may vary depending on the type of the solvent, and thus are not particularly limited in the present invention. Examples of the drying method may comprise a drying method by warm air, hot air, or low-humidity air, a vacuum drying method, and a drying method by irradiation with (far)-infrared radiation or electron beam. The drying rate is usually adjusted so that the solvent can be removed as quickly as possible within a speed range that does not cause cracks in the positive electrode active material layer due to the concentration of stress and does not delaminate the positive electrode active material layer from the positive electrode current collector.

Additionally, the density of the positive electrode active material in the positive electrode may be increased by pressing the current collector after drying. Methods, such as a mold press and a roll press, are mentioned as a press method.

The porosity of the positive electrode, specifically, the positive electrode active material layer prepared by the above-described composition and manufacturing method may be 40 to 80%, or 60 to 75%. When the porosity of the positive electrode is less than 40%, since the degree of filling of the slurry composition for the positive electrode comprising a positive electrode active material, an electrically conductive material, and a binder becomes too high, there are problems that sufficient electrolyte to exhibit ion conduction and/or electrical conduction between positive electrode active materials cannot be maintained, and thus output characteristics or cycle characteristics of the battery may be deteriorated, the overvoltage and the reduction in discharging capacity become serious. On the contrary, when the porosity of the positive electrode exceeds 80% and has an excessively high porosity, there is a problem that the physical and electrical connection with the current collector is lowered and thus adhesion is lowered and the reaction becomes difficult, and there is a problem that the increased porosity is filled by the electrolyte and thus the energy density of the battery is lowered. Therefore, the porosity of the positive electrode is appropriately adjusted within the above range.

In addition, the loading amount of sulfur in the positive electrode according to the present invention, that is, the mass of sulfur per unit area of the positive electrode active material layer in the positive electrode may be 2 to 15 mg/cm², preferably 2.5 to 5 mg/cm².

The negative electrode may comprise a negative electrode current collector and a negative electrode active material layer applied to one or both surfaces of the negative electrode current collector. Alternatively, the negative electrode may be a lithium metal plate.

The negative electrode current collector is for supporting the negative electrode active material layer and is as described in the positive electrode current collector.

The negative electrode active material layer may comprise a conductive material, a binder, etc. in addition to the negative electrode active material. At this time, the conductive material and the binder are as described above.

The negative electrode active material may comprise a material capable of reversibly intercalating or deintercalating lithium ion (Li⁺), a material capable of reacting with lithium ion to reversibly form lithium containing compounds, lithium metal, or lithium alloy.

The material capable of reversibly intercalating or deintercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

The negative electrode active material may be lithium metal, and specifically, may be in the form of a lithium metal thin film or a lithium metal powder.

The method of forming the negative electrode active material is not particularly limited, and may include a method of forming a layer or film commonly used in the art. For example, methods such as compression, coating, or deposition can be used. In addition, a metal lithium thin film formed on a metal plate by initial charging after assembling the battery without the lithium thin film in the current collector is also comprised in the negative electrode of the present invention.

The electrolyte is for causing an electrochemical oxidation or reduction reaction between the positive electrode and the negative electrode through them and is as described above.

The injection of the electrolyte may be performed at an appropriate stage of the manufacturing processes of the lithium-sulfur battery, depending on the manufacturing process and required properties of the final product. That is, the injection can be performed before assembling the lithium-sulfur battery or at the final stage of assembling the lithium-sulfur battery.

A separator may be additionally comprised between the positive electrode and the negative electrode.

The separator may be made of a porous non-conductive or insulating material that separates or insulates the positive electrode and the negative electrode from each other and enables transport of lithium ions between the positive electrode and the negative electrode. The separator may be used without special limitation as long as it is used as a separator in a conventional lithium-sulfur battery. The separator may be an independent member such as a film or may comprise a coating layer added to the positive and/or negative electrodes.

It is preferable that the separator has excellent wettability to the electrolyte while having low resistance to ion migration of the electrolyte.

The separator may be made of a porous substrate, and the porous substrate may be used as long as it is a porous substrate commonly used for a lithium-sulfur battery, and porous polymer films may be used alone or by laminating them, and for example, a nonwoven fabric or a polyolefin-based porous membrane made of glass fibers, polyethylene terephthalate fibers, etc. having a high melting point may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 *µ*m, preferably 5 to 50 *µ*m. Although the thickness range of the porous substrate is not particularly limited to the above-mentioned range, when the thickness is excessively thinner than the lower limit described above, mechanical properties are deteriorated and thus the separator may be easily damaged during use of the battery.

The average diameter and porosity of the pores present in the porous substrate are also not particularly limited, but may be 0.001 *µ*m to 50 *µ*m and 10 to 95%, respectively.

The lithium-sulfur battery according to the present invention can be manufactured by lamination, stacking, and folding processes of the separator and the electrodes, in addition to the usual winding process.

The shape of the lithium-sulfur battery is not particularly limited and may be various shapes such as a cylindrical shape, a laminate shape, a pouch shape and a coin shape.

Also, the present invention provides a battery module comprising the lithium-sulfur battery described above as a unit battery.

The battery module may be used as a power source for medium to large-sized devices requiring high temperature stability, long cycle characteristics, high capacity characteristics, and the like.

Examples of such medium to large-sized devices may comprise, but are not limited to, a power tool powered and moved by an electric motor; an electric car including an electric vehicle (EV), a hybrid electric vehicle (HEV), a plug-in hybrid electric vehicle (PHEV), and the like; an electric motorcycle including an electric bike (E-bike) and an electric scooter (E-scooter); an electric golf cart; a power storage system, etc.

### EXAMPLES

Hereinafter, specific examples of the present invention will be described.

### <Preparation of an electrolyte for a lithium-sulfur battery>

### Examples 1 to 4 and comparative example 1 (Examples 1, 2, and 4 not according to the invention)

An electrolyte for a lithium-sulfur battery is prepared according to the composition as shown in the following Table 1.

**[Table 1]**

| | Lithium salt | | Organic solvent | Nitrogen compound |
|---|---|---|---|---|
| | Type | Concentration | | |
| Example 1 | LiTFSI | 0.1875 M | 2-MeF:DME (2:8 (v/v)) | LiNO₃ |
| | LiFSI | 0.5625 M | | |
| Example 2 | LiTFSI | 0.375 M | | |
| | LiFSI | 0.375 M | | |
| Example 3 | LiTFSI | 0.5625 M | | |
| | LiFSI | 0.1875 M | | |
| Example 4 | LiTFSI | 0.75 M | | |
| | LiFSI | - | | |
| Comparative Example 1 | LiTFSI | - | | |
| | LiFSI | 0.75 M | | |

The nitrogen compound is included in an amount of 5 wt% based on the total weight of the electrolyte solution for a lithium-sulfur battery, and 2-MeF is 2-methylfuran, and DME is dimethoxyethane.

### Experimental example 1. Evaluation of oxidation stability of electrolyte for lithium-sulfur battery

For each electrolyte solution for a lithium-sulfur battery prepared in examples 1 to 4 and comparative example 1, oxidation stability evaluation is conducted.

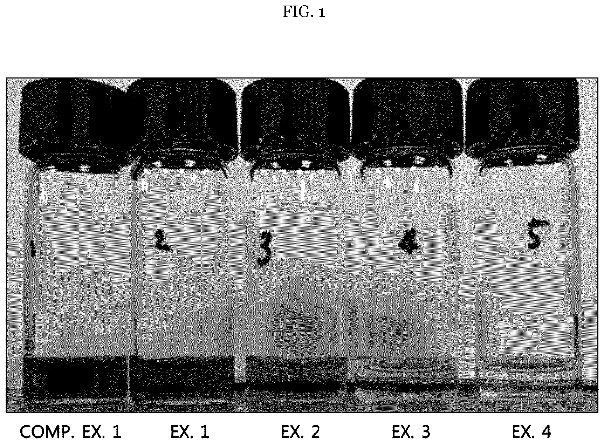

The oxidation stability evaluation is conducted by observing the extent of browning of each electrolyte solution for a lithium-sulfur battery prepared in examples 1 to 4 and comparative example 1 when sealed into a vial after exposed to air (20% oxygen, 25 °C, 1 atm), and the results after 24 hours since the vial was sealed are shown in FIG. 1.

Referring to FIG. 1, browning by oxidation through the oxygen of the air within the vial is observed in each electrolyte for a lithium-sulfur battery prepared in examples 1 to 4 and comparative example 1, but it can be seen that as the concentration of lithium bis(trifluoromethanesulfonyl)imide (LiTFSI) increases, the extent of browning decreases.

Therefore, it can be seen that as the concentration of lithium bis(trifluoromethanesulfonyl)imide as the lithium salt of the electrolyte is higher, oxidation stability is higher.

### Experimental example 2. Evaluation of high temperature (60°C) stability of electrolyte for lithium-sulfur battery

After storage of each electrolyte for a lithium-sulfur battery prepared in examples 2 and 3 and comparative example 1 within a high temperature chamber of 60°C for 4 weeks in sealed state, high temperature stability is evaluated by quantitatively analyzing the lithium salt remaining in the electrolyte solution.

Specifically, quantitative analysis of lithium salt was performed by NMR analysis using isotopes and ion chromatography (IC) analysis after organic solvent extraction using THF for each electrolyte for a lithium-sulfur battery of examples 2 and 3 and comparative example 1, and the results are shown in the following Table 2. The following Table 2 shows a ratio (%) of the weight of the remaining lithium salt to the initial weight of the lithium salt.

**[Table 2]**

| | LiTFSI | LiFSI |
|---|---|---|
| Example 2 | 98% | 0% |
| Example 3 | 96% | 0% |
| Comparative Example 1 | - | 0% |

The results of Table 2 reveal that lithium bis(fluorosulfonyl)imide does not remain and completely decomposes. However, the results also reveal that lithium bis(trifluoromethanesulfonyl)imide (LiTFSI) remains up to 98%.

Therefore, it can be seen that lithium bis(trifluoromethanesulfonyl)imide does not decompose at high temperature (60°C), showing high temperature stability.

### Experimental example 3. Evaluation of capacity retention after high temperature (60°C) storage of lithium-sulfur battery

95 wt% of a sulfur-carbon composite (S:C = 75:25 (weight ratio)) as a positive electrode active material is mixed with 5 wt% of lithium polyacrylate (LiPAA) as a binder to prepare a positive electrode slurry composition. The positive electrode slurry composition is coated on an aluminum current collector and dried to manufacture a positive electrode.

The manufactured positive electrode has a loading amount of 3.5 to 4.5 mAh/cm².

Lithium metal is used for a negative electrode.

A polyethylene separator having the thickness of 16 *µ*m and the porosity of 46% is interposed between the positive electrode and the negative electrode, and each electrolyte prepared in examples 2 and 3 and comparative example 1 is injected to manufacture a pouch cell-type lithium-sulfur battery.

The pouch-cell type lithium-sulfur battery has no exposure of the electrolyte solution to air.

Specifically, each electrolyte prepared in examples 2 and 3 and comparative example 1 is used after stored for 1 week, 2 weeks, 3 weeks and 4 weeks, and the coin cell-type lithium-sulfur battery comprising the electrolyte solution is tested to evaluate the capacity retention, and the test is repeated for 4 weeks.

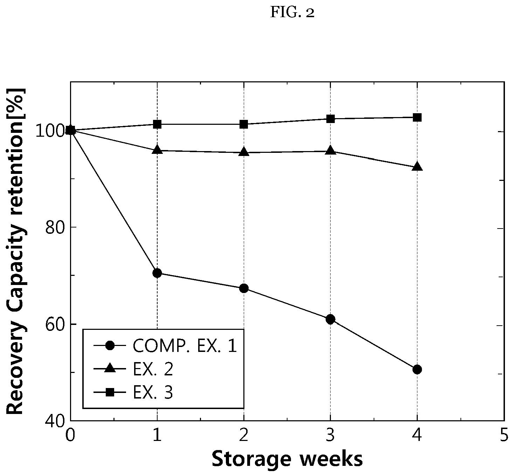

The capacity retention is calculated on the basis of the fourth discharge capacity in four charge/discharge cycles at 0.1 C before the storage, and the fourth discharge capacity in four discharge/charge cycles at 0.1 C after the storage, and the results are shown in FIG. 2.

The results of FIG. 2 reveal that comparative example 1 with no lithium bis(trifluoromethanesulfonyl)imide as the lithium salt has a significant decline in capacity retention as the high temperature storage of the electrolyte solution is longer. The results also reveal that even though the electrolyte solution is stored at high temperature for a prolonged time, example 2 with lithium bis(trifluoromethanesulfonyl)imide and lithium bis(fluorosulfonyl)imide at the same molar concentration, and example 3 with lithium bis(trifluoromethanesulfonyl)imide at a higher molar concentration than lithium bis(fluorosulfonyl)imide retain the capacity. It is found that in the experimental example 2, when the electrolyte is stored within the high temperature chamber of 60°C for 4 weeks in sealed state, most of lithium bis(trifluoromethanesulfonyl)imide remains while lithium bis(fluorosulfonyl)imide completely decomposes.

Therefore, it is expected from the results of example 3 that lithium bis(fluorosulfonyl)imide decomposes over time, and accordingly, it can be seen that examples 2 and 3 with higher concentration of lithium bis(trifluoromethanesulfonyl)imide shows the improved capacity retention.

It can be seen from the above results that the electrolyte for a lithium-sulfur battery according to the present disclosure has the improved storage stability at a high temperature (60°C), leading to the improved capacity retention of a lithium-sulfur battery comprising the same.

### Experimental example 4. Evaluation of high temperature (45°C) characteristics of coin cell-type lithium-sulfur battery

A coin cell-type lithium sulfur battery comprising each electrolyte for a lithium-sulfur battery according to examples 1 to 4 and comparative example 1 is manufactured by the same method as the experimental example 3, except that lithium metal is coated on a copper current collector to manufacture a negative electrode.

The coin cell-type lithium-sulfur battery is subjected to oxidation by the exposure of the electrolyte solution to air.

For each coin cell-type lithium-sulfur battery comprising the electrolyte for a lithium-sulfur battery according to examples 1 to 4 and comparative example 1, life characteristics are evaluated using a charge/discharge tester (LAND CT-2001A, available from Wuhan Co.)

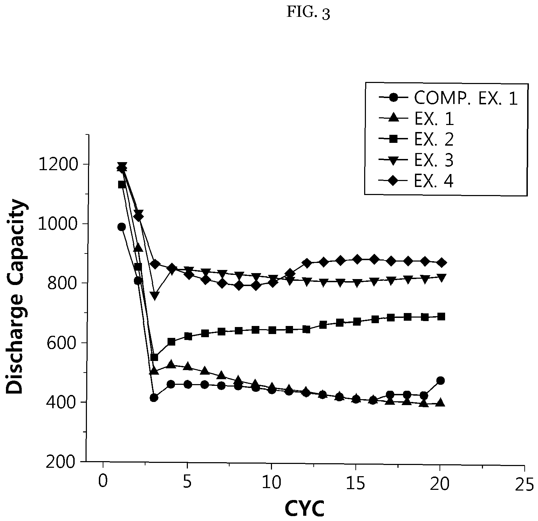

Specifically, life characteristics are measured after repeating 2.5 times the discharge at the current density of 0.1 C at 45°C until 1.8 V and the charge with constant current until 2.5 V, and repeating the discharge/charge at the current density of 0.2 C three times, followed by cycling at a current density of 0.5 C, and the results are shown in FIG. 3.

The results of FIG. 3 reveal that comparative example 1 with no lithium bis(trifluoromethanesulfonyl)imide as the lithium salt has poor life characteristics at 45°C.

Example 1 comprises lithium bis(trifluoromethanesulfonyl)imide and lithium bis(fluorosulfonyl)imide as the lithium salt, but the molar concentration of lithium bis(trifluoromethanesulfonyl)imide is lower than the molar concentration of lithium bis(fluorosulfonyl)imide, and in the similar way to comparative example 1, example 1 exhibits poor life characteristics.

Example 2 comprises lithium bis(trifluoromethanesulfonyl)imide and lithium bis(fluorosulfonyl)imide at the same molar concentration, and exhibits the improved life characteristics at 45°C.

Example 3 comprises lithium bis(trifluoromethanesulfonyl)imide at a higher molar concentration than the molar concentration of lithium bis(fluorosulfonyl)imide, and example 4 comprises bis(trifluoromethanesulfonyl)imide alone, and both examples 3 and 4 have the improved life characteristics at 45°C, showing better results than example 2.

It can be seen from the above results that comprising bis(trifluoromethanesulfonyl)imide as the lithium salt, or comprising bis(trifluoromethanesulfonyl)imide at higher molar concentration than the molar concentration of lithium bis(fluorosulfonyl)imide provides the improved life characteristics at high temperature (45°C).

### Experimental example 5. Evaluation of high temperature (45°C) performance of pouch cell-type lithium-sulfur battery

A pouch cell-type lithium sulfur battery comprising each electrolyte for a lithium-sulfur battery prepared in examples 2 to 4 and comparative example 1 is manufactured by the same method as the experimental example 3.

The pouch-cell type lithium-sulfur battery has no exposure of the electrolyte to air.

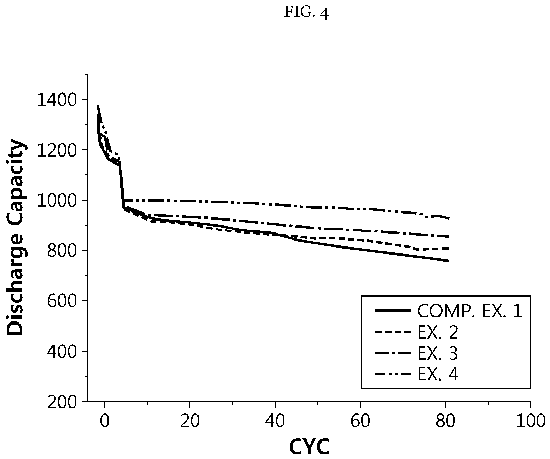

The life characteristics are evaluated under the same condition as the experimental example 4, and the results are shown in FIG. 4.

The results of FIG. 4 show the same tendency as the results of FIG. 3. However, since the electrolyte of the pouch cell-type lithium-sulfur battery is not subjected to oxidation with no exposure to air, the pouch cell-type lithium-sulfur battery shows better performance at high temperature than the coin cell-type lithium-sulfur battery.

## Claims

1. Electrolyte for a lithium-sulfur battery comprising a non-aqueous organic solvent and a lithium salt, wherein the lithium salt comprises lithium bis(trifluoromethanesulfonyl)imide,
wherein the lithium salt comprises one or more lithium salts other than lithium bis(trifluoromethanesulfonyl)imide and the other lithium salt comprises lithium bis(fluorosulfonyl)imide,
wherein the lithium bis(trifluormethanesulfonyl)imide and the one or more lithium salts other than lithium bis(trifluormethanesulfonyl)imide are present in the electrolyte in a molar ratio of 70:30 to 90:10, and
wherein the non-aqueous organic solvent comprises 70 vol% to 95 vol% of a linear ether-based compound and 5 vol% to 30 vol% of a heterocyclic compound including one or more double bonds.

2. Electrolyte for the lithium-sulfur battery according to claim 1, wherein the linear ether-based compound comprises at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

3. Electrolyte for a lithium-sulfur battery according to any of claims 1 to 2, wherein the heterocyclic compound includes at least one hetero atom selected from the group consisting of an oxygen atom and a sulfur atom.

4. Electrolyte for a lithium-sulfur battery according to any of the claims 1 to 3, wherein the heterocyclic compound comprises at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene.

5. Lithium-sulfur battery comprising a positive electrode comprising a positive electrode active material, a negative electrode comprising a negative electrode active material; a separator; and an electrolyte according to any of the claims 1-4.

6. Lithium-sulfur battery according to claim 5, wherein the positive electrode active material comprises at least one selected from the group consisting of elemental sulfur and a sulfur compound.

7. Lithium-sulfur battery according to claim 5 or 6, wherein the positive electrode active material comprises at least one selected from the group consisting of inorganic sulfur, Li₂Sₙ with n≥1, a disulfide compound, an organic sulfur compound, and a carbon-sulfur polymer (C₂Sₓ)ₙ with x=2.5 to 50 and n≥2.

8. Lithium-sulfur battery according to any of the claims 5 to 7, wherein the negative electrode active material comprises at least one selected from the group consisting of lithium metal and lithium alloy.

## Patentansprüche

1. Elektrolyt für eine Lithium-Schwefel-Batterie, umfassend ein nichtwässriges organisches Lösungsmittel und ein Lithiumsalz, wobei das Lithiumsalz Lithiumbis(trifluormethansulfonyl)imid umfasst,
wobei das Lithiumsalz ein oder mehrere andere Lithiumsalze als Lithiumbis(trifluormethansulfonyl)imid umfasst und das andere Lithiumsalz Lithiumbis(fluorsulfonyl)imid umfasst,
wobei das Lithiumbis(trifluormethansulfonyl)imid und das eine oder die mehreren anderen Lithiumsalze als Lithiumbis(trifluormethansulfonyl)imid in dem Elektrolyt in einem Molverhältnis von 70:30 bis 90:10 vorhanden sind, und
wobei das nichtwässrige organische Lösungsmittel 70 Vol.-% bis 95 Vol.-% einer linearen Verbindung auf Etherbasis und 5 Vol.-% bis 30 Vol.-% einer heterocyclischen Verbindung, die eine oder mehrere Doppelbindungen einschließt, umfasst.

2. Elektrolyt für die Lithium-Schwefel-Batterie nach Anspruch 1, wobei die lineare Verbindung auf Etherbasis mindestens eine, ausgewählt aus der Gruppe, bestehend aus Dimethylether, Diethylether, Dipropylether, Methylethylether, Methylpropylether, Ethylpropylether, Dimethoxyethan, Diethoxyethan, Ethylenglycolethylmethylether, Diethylenglycoldimethylether, Diethylenglycoldiethylether, Diethylenglycolmethylethylether, Triethylenglycoldimethylether, Triethylenglycoldiethylether, Triethylenglycolmethylethylether, Tetraethylenglycoldimethylether, Tetraethylenglycoldiethylether, Tetraethylenglycolmethylethylether, Polyethylenglycoldimethylether, Polyethylenglycoldiethylether und Polyethylenglycolmethylethylether, umfasst.

3. Elektrolyt für eine Lithium-Schwefel-Batterie nach einem der Ansprüche 1 bis 2, wobei die heterocyclische Verbindung mindestens ein Heteroatom, ausgewählt aus der Gruppe, bestehend aus einem Sauerstoffatom und einem Schwefelatom, einschließt.

4. Elektrolyt für eine Lithium-Schwefel-Batterie nach einem der Ansprüche 1 bis 3, wobei die heterocyclische Verbindung mindestens eine, ausgewählt aus der Gruppe, bestehend aus Furan, 2-Methylfuran, 3-Methylfuran, 2-Ethylfuran, 2-Propylfuran, 2-Butylfuran, 2,3-Dimethylfuran, 2,4-Dimethylfuran, 2,5-Dimethylfuran, Pyran, 2-Methylpyran, 3-Methylpyran, 4-Methylpyran, Benzofuran, 2-(2-Nitrovinyl)furan, Thiophen, 2-Methylthiophen, 2-Ethylthiophen, 2-Propylthiophen, 2-Butylthiophen, 2,3-Dimethylthiophen, 2,4-Dimethylthiophen und 2,5-Dimethylthiophen, umfasst.

5. Lithium-Schwefel-Batterie, umfassend eine positive Elektrode, umfassend ein aktives Material der positiven Elektrode, eine negative Elektrode, umfassend ein aktives Material der negativen Elektrode; einen Separator; und einen Elektrolyten nach einem der Ansprüche 1 bis 4.

6. Lithium-Schwefel-Batterie nach Anspruch 5, wobei das aktive Material der positiven Elektrode mindestens eines, ausgewählt aus der Gruppe, bestehend aus elementarem Schwefel und einer Schwefelverbindung, umfasst.

7. Lithium-Schwefel-Batterie nach Anspruch 5 oder 6, wobei das aktive Material der positiven Elektrode mindestens eines, ausgewählt aus der Gruppe, bestehend aus anorganischem Schwefel, Li₂Sₙ mit n≥1, einer Disulfidverbindung, einer organischen Schwefelverbindung und einem Kohlenstoff-Schwefel-Polymer (C₂Sₓ)ₙ mit x=2,5 bis 50 und n≥2, umfasst.

8. Lithium-Schwefel-Batterie nach einem der Ansprüche 5 bis 7, wobei das aktive Material der negativen Elektrode mindestens eines, ausgewählt aus der Gruppe, bestehend aus Lithiummetall und Lithiumlegierung, umfasst.

## Revendications

1. Électrolyte pour une batterie au lithium-soufre comprenant un solvant organique non aqueux et un sel de lithium, dans lequel le sel de lithium comprend un lithium bis(trifluorométhanesulfonyl)imide,
dans lequel le sel de lithium comprend un ou plusieurs sels de lithium autre que le lithium bis(trifluorométhanesulfonyl)imide et l'autre sel de lithium comprend le lithium bis(fluorosulfonyl)imide,
dans lequel le lithium bis(trifluorméthanesulfonyl)imide et ledit un ou plusieurs sels de lithium autre que le lithium bis(trifluorméthanesulfonyl)imide sont présents dans l'électrolyte dans un rapport molaire de 70:30 à 90:10, et
dans lequel le solvant organique non aqueux comprend 70 % en volume à 95 % en volume d'un composé à base d'éther linéaire et 5% en volume à 30 % en volume d'un composé hétérocyclique incluant une ou plusieurs double liaisons.

2. Électrolyte pour la batterie au lithium-soufre selon la revendication 1, dans lequel le composé à base d'éther linéaire comprend un ou plusieurs éléments sélectionnés dans le groupe constitué de l'éther diméthylique, éther diéthylique, éther dipropylique, éther méthyléthylique, éther méthylpropylique, éther éthylpropylique, diméthoxyéthane, diéthoxyéthane, éther éthylméthylique d'éthylène glycol, éther diméthylique de diéthylène glycol, éther diéthylique de diéthylène glycol, éther méthyléthylique de diéthylène glycol, éther diméthylique de triéthylène glycol, éther diéthylique de triéthylène glycol, éther méthyléthylique de triéthylène glycol, éther diméthylique de tétraéthylène glycol, éther diéthylique de tétraéthylène glycol, éther méthyléthylique de tétraéthylène glycol, éther diméthylique de polyéthylène glycol, éther diéthylique de polyéthylène glycol et éther méthyléthylique de polyéthylène glycol.

3. Électrolyte pour une batterie au lithium-soufre selon l'une quelconque des revendications 1 à 2, dans lequel le composé hétérocyclique inclut un ou plusieurs hétéroatomes sélectionnés dans le groupe constitué d'un atome d'oxygène et d'un atome de soufre.

4. Électrolyte pour une batterie au lithium-soufre selon l'une quelconque des revendications 1 à 3, dans lequel le composé hétérocyclique comprend un ou plusieurs éléments sélectionnés dans le groupe constitué de furane, 2-méthylfurane, 3-méthylfurane, 2-éthylfurane, 2-propylfurane, 2-butylfurane, 2,3-diméthylfurane, 2,4-diméthylfurane, 2,5-diméthylfurane, pyrane, 2-méthylpyrane, 3-méthylpyrane, 4-méthylpyrane, benzofurane, 2-(2-nitrovinyl)furane, thiophène, 2-méthylthiophène, 2-éthylthiophène, 2-propylthiophène, 2-butylthiophène, 2,3-diméthylthiophène, 2,4-diméthylthiophène et 2,5-diméthylthiophène.

5. Batterie au lithium-soufre comprenant une électrode positive comprenant un matériau actif d'électrode positive, une électrode négative comprenant un matériau actif d'électrode négative ; un séparateur ; et un électrolyte selon l'une quelconque des revendications 1 à 4.

6. Batterie au lithium-soufre selon la revendication 5, dans laquelle le matériau actif d'électrode positive comprend un ou plusieurs éléments sélectionnés dans le groupe constitué de soufre élémentaire et d'un composé de soufre.

7. Batterie au lithium-soufre selon la revendication 5 ou 6, dans laquelle le matériau actif d'électrode positive comprend un ou plusieurs éléments sélectionnés dans le groupe constitué de soufre inorganique, Li₂Sₙ avec n≥1, un composé de disulfure, un composé de soufre organique et un polymère de carbone-soufre (C₂Sₓ)ₙ avec x=2,5 à 50 et n≥2.

8. Batterie au lithium-soufre selon l'une quelconque des revendications 5 à 7, dans laquelle le matériau actif d'électrode négative comprend un ou plusieurs éléments sélectionnés dans le groupe constitué de lithium métal et d'alliage de lithium.
